**Europäisches Patentamt**

**European Patent Office**

**Office européen des brevets**

(19)

(11) Veröffentlichungsnummer : **0 329 919 B1**

(12)

# EUROPÄISCHE PATENTSCHRIFT

(45) Veröffentlichungstag der Patentschrift :
**18.03.92 Patentblatt 92/12**

(51) Int. Cl.⁵ : **B01D 53/26,** B01D 46/00,
B01D 46/42

(21) Anmeldenummer : **88810872.7**

(22) Anmeldetag : **19.12.88**

(54) **Vorrichtung zum Entfernen von Oel aus einem Strom komprimierten Gases.**

(30) Priorität : **25.02.88 CH 707/88**

(43) Veröffentlichungstag der Anmeldung :
**30.08.89 Patentblatt 89/35**

(45) Bekanntmachung des Hinweises auf die
Patenterteilung :
**18.03.92 Patentblatt 92/12**

(84) Benannte Vertragsstaaten :
**AT BE DE FR GB IT**

(56) Entgegenhaltungen :
**DE-A- 2 658 310**

(73) Patentinhaber : **Maschinenfabrik
Sulzer-Burckhardt AG
Dornacherstrasse 210
CH-4002 Basel (CH)**

(72) Erfinder : **Müller, Eduard
Rainstrasse 13
CH-8356 Ettenhausen (CH)**

(74) Vertreter : **Steller, Manfred
Gebrüder Sulzer AG Zürcherstrasse 9
CH-8401 Winterthur (CH)**

**Beschreibung**

Die Erfindung betrifft eine Vorrichtung zum Entfernen von Oel aus einem Strom komprimierten Gases, mit mindestens einem Abscheider, der über einen Eintritt und einen Austritt an eine den Gasstrom führende Leitung angeschlossen ist und in dem Oel vom Gas getrennt und über einen absperrbaren Oelablass entfernt wird.

Bei bekannten Vorrichtungen dieser Art wird das vom Gasstrom abgeschiedene Oel entweder periodisch durch Oeffnen des absperrbaren Oelablasses oder kontinuierlich durch eine Niveauregelung abgelassen. Beim Oeffnen des Oelablasses wird das Oel direkt auf Umgebungsdruck entspannt, so dass es umso heftiger ausgestossen wird, je grösser die Druckdifferenz zwischen dem Gasdruck im Abscheider und dem Umgebungsdruck ist. Damit bewirkt das Oeffnen des Oelablasses auch eine gasseitige Störung, was zur Folge hat, dass während des Ablassens des Oels ein Teil davon verwirbelt und in ein Aerosol verwandelt wird, und in dieser Form in das schon gereinigte Gas zurückgelangt. Dies sollte aber gerade durch den Abscheider vermieden werden und ist in solchem Fällen unzulässig, in denen strenge Anforderungen an die Reinheit des Gases gestellt werden.

Der Erfindung liegt die Aufgabe zugrunde, eine Vorrichtung der eingangs genannten Art so zu verbessern, dass beim Ablassen von abgeschiedenem Oel ein Wiedereintreten von Oel in das schon gereinigte Gas sicher vermieden wird.

Diese Aufgabe wird erfindungsgemäss dadurch gelöst, dass unterhalb des Abscheiders ein einen Gasraum und einen Oelsammelraum aufweisender Behälter vorhanden ist, der über den absperrbaren Oelablass am Abscheider mit diesem verbunden ist, dass der Gasraum des Behälters über ein Absperrventil mit dem Gasaustritt des Abscheiders verbunden ist, dass der Gasraum des Behälters ausserdem über eine Drosselstelle mit einem Raum verbunden ist, in dem ein niedrigerer Druck herrscht als im Gasraum, und dass der Oelsammelraum des Behälters mit einem ein Absperrventil aufweisenden Oelablass versehen ist. Hierdurch wird es möglich, zwischen dem Abscheider und dem Behälter eine verhältnismässig kleine Druckdifferenz einzuhalten, die während der Oelablassphase aus dem Abscheider keine für eine Aerosolbildung genügende Verwirbelung des Oels zur Folge hat. Das im Abscheider gereinigte Gas bleibt also sauber. Andererseits ist es mit der erfindungsgemässen Vorrichtung möglich, beim Ablassen von Oel aus dem Oelsammelraum des Behälters diesen Behälter mit Hilfe des Absperrventils, das in der den Gasraum mit dem Gasaustritt des Abscheiders verbindenden Leitung angeordnet ist, vom Abscheideraustritt zu trennen, so dass wiederum sichergestellt ist, dass kein Oel in Form eines Aerosols zum gereinigten Druckgas zurückgelangt.

Zwei Ausführungsbeispiele der Erfindung werden in der folgenden Beschreibung anhand der Zeichnung näher erläutert. Es zeigen jeweils schematisch:

Fig. 1 eine Kompressoranlage mit einer Oelablassvorrichtung gemäss der Erfindung und

Fig. 2 eine Oelablassvorrichtung unter Verwendung mehrerer Abscheider.

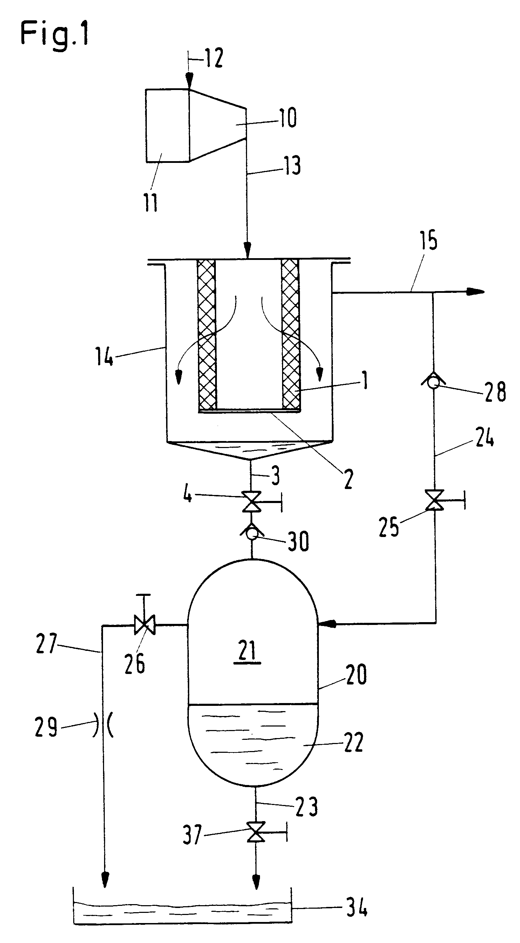

Gemäss Fig. 1 ist mit 10 ein Kompressor bezeichnet, dessen nich näher dargestellter Kolben über ein Kurbeltriebwerk 11 hin und her bewegt wird, wobei über eine Saugleitung 12 zu komprimierendes Gas angesaugt und verdichtet wird. Das komprimierte Gas verlässt den Kompressor 10 über eine Druckleitung 13. Die Druckleitung 13 ist mit einem Gaseintritt eines Abscheiders 14 verbunden, an dessen Gasaustritt eine Druckleitung 15 angeschlossen ist, die zu einem nicht dargestellten Verbraucher für das komprimierte Gas führt. Im Abscheider 14 ist koaxial zum Gaseintritt ein zylindrischer Mikrofaserfilter 1 angeordnet, der an seinem in Fig. 1 unteren Ende mit einer Platte 2 verschlossen ist. Das von oben in den Filter 1 strömende komprimierte Gas durchströmt den Filter also quer zur Eintrittsrichtung, wobei beim Durchtritt des Gases durch den Filter das im Gas enthaltene Oel zurückgehalten wird. Das vom Oel gereinigte Gas verlässt den Abscheider 14 über die Leitung 15. Das abgeschiedene Oel sammelt sich im unteren trichterförmigen Teil des Abscheiders 14, an dessen tiefsten Punkt eine Oelablassleitung 3 mit Absperrventil 4 angeschlossen ist. Die bis hieher beschriebene Anlage ist bekannt.

Erfindungsgemäss ist ausser dem Abscheider 14 ein Behälter 20 vorhanden, der mit seinem oberen Teil einen Gasraum 21 und mit seinem unteren Raum einen Oelsammelraum 22 bildet. Der Behälter 20 ist an seinem in Fig. 1 oberen Ende mit der Oelablassleitung 3 des Abscheiders 14 verbunden. Ausserdem ist der Gasraum 21 des Behälters 20 über eine Leitung 24 mit der Druckleitung 15 verbunden. Die Leitung 24 weist ein Absperrventil 25 sowie stromoberhalb von diesem ein in Richtung auf die Druckleitung 15 schliessendes Rückschlagventil 28 auf. Ein gegen den Abscheider 14 schliessendes Rückschlagventil 30 ist in der Oelablassleitung 3 zwischen dem Behälter 20 und dem Absperrventil 4 angeordnet. Am Gassammelraum 21 des Behälters 20 ist weiter eine Leitung 27 angeschlossen, die mit einem Absperrventil 26 und einer Drosselstelle 29 versehen ist und die in einen Raum mündet, z.B. die umgebende Atmosphäre, in der ein niedrigerer Druck herrscht als im Behälter 20. An der teifsten Stelle des Behälters 20 ist eine Oelablassleitung 23 mit einem Absperrventil 37 angeschlossen. Die Ablassleitung 23 mündet in ein Oelsammelgefäss 34.

Die Anlage gemäss Fig. 1 funktioniert wie folgt. Im normalen Betrieb des Kompressors 10 ist das Absperrventil 4 in der Oelablassleitung 3 des Abscheiders 14 geschlossen, während die Absperrventile 25 and 26 offen sind. Auch das Absperrventil 37 in der Oelablassleitung 23 des Behälters 20 ist geschlossen. Infolge der offenen Absperrventile 25 und 26 wird der Behälter 20 ständig von einer kleinen Menge Gas durchflossen, die von der Grösse des an der Drosselstelle 29 eingestellten Querschnitts abhängig ist. Der Druck im Gasraum 21 des Behälters 20 liegt knapp unterhalb des am Gasaustritt des Abscheiders 14 herrschenden Druckes. Sollte sich im Behälter 20 infolge von Druckschwankungen in der Druckleitung 15 vorübergehend ein höherer Druck einstellen, so wird wegen des Rückschlagventils 28 ein Zurückfliessen von Gas zur Leitung 15 verhindert.

Wenn das Oel, das sich im Abscheider 14 angesammelt hat, aus diesem abgelassen werden soll, so werden das Absperrventil 25 in der Leitung 24 geschlossen und das Absperrventil 4 in der Oelablassleitung 3 geöffnet. Das Oel im Abscheider 14 fliesst unter der Wirkung der Gravitation in den Behälter 20, wobei dieses Abfliessen durch die Druckdifferenz zwischen dem Gas im Abscheider und dem Gas im Behälter unterstützt wird. Sobald das Oel aus dem Abscheider 14 abgeflossen ist, werden das Absperrventil 4 geschlossen und das Absperrventil 25 geöffnet, so dass sich wieder der zuvor beschriebene Normalbetrieb einstellt.

Je nach Grösse des Behälters 20 kann das beschriebene Ablassen des Oels aus dem Abscheider 14 mehrmals erfolgen, bevor das Oel aus dem Oelsammelraum 22 des Behälters 20 abgelassen wird. Soll das Oel aus dem Behälter 20 abgelassen werden, so wird das Absperrventil 25 geschlossen, während das Absperrventil 4 geschlossen bleibt. Damit ist der Behälter 20 vollständig vom Abscheider 14 und der Druckleitung 15 getrennt. Das Absperrventil 37 in der Oelablassleitung 23 wird geöffnet und der im Gasraum 21 herrschende Druck stösst das Oel aus dem Sammelraum 22 rasch aus. Ein sich dabei bildendes Aerosol aus Oel und Gas ist wegen der erwähnten Trennung des Behälters 20 unschädlich für das in der Druckleitung 15 strömende Gas, und zwar auch nach dem Schliessen des Absperrventils 37 und dem Wiederöffnen des Absperrventils 25, da der Druck im Behälter 20 kleiner bleibt als in der Druckleitung 15. Falls an die Reinheit des in der Druckleitung 15 strömenden Gases keine extrem hohen Anforderungen gestellt werden, kann sowohl beim Ablassen von Oel aus dem Abscheider 14 als auch beim Ablassen von Oel aus dem Behälter 20 das Absperrventil 25 offen bleiben, so dass dann während der ganzen Zeit, während der das Absperrventil 4 bzw. 37 offen ist, eine minimale Druckdifferenz das Oel aus dem Abscheider 14 und eine maximale Druckdifferenz das Oel aus dem Behälter 20 treiben.

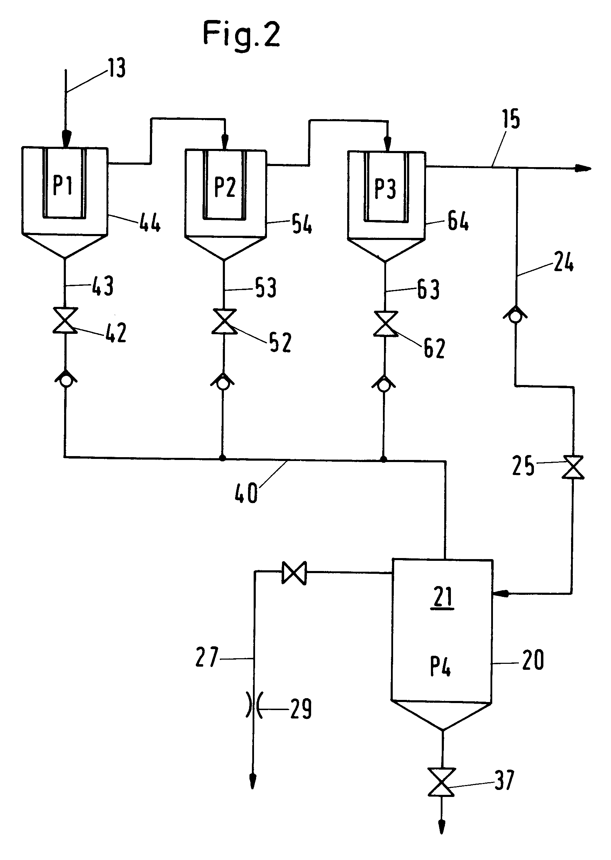

Gemäss Fig. 2 sind drei Abscheider 44, 54, 64 vorgesehen, die gasseitig in Reihe geschaltet sind, indem der vom komprimierten Gas zuerst durchströmte Abscheider 44 gasaustrittsseitig mit dem Eintritt des an zweiter Stelle durchströmten Abscheiders 54 verbunden ist usw. Die Oelablassleitungen 43, 53 bzw. 63 der Abscheider sind in einer gemeinsamen Leitung 40 zusammengefasst, die - wie die Oelablassleitung 3 beim Ausführungsbeispiel nach Fig. 1 - in den Gasraum 21 des Behälters 20 mündet.

Im Betrieb der Vorrichtung nach Fig. 2 stellen sich in den drei Abscheidern 44, 54, 64 und im Behälter 20 die Drücke p1, p2, p3 bzw. p4 ein, zwischen denen die Beziehung besteht:

$$p1 > p2 > p3 > p4.$$

Die maximale Druckdifferenz $\Delta p = p1 - p4$ ist klein im Verhältnis zu p1:

$$\frac{\Delta p}{p1} = 1 - \frac{p4}{p1}$$

Bei der Ausführungsform nach Fig. 2 wird erreicht, dass keine Störung der Gasgeschwindigkeit im Abscheider 44, 54 oder 64 auftritt, wenn das Absperrventil 42, 52 bzw. 62 in der zugehörigen Oelablassleitung 43, 53 bzw. 63 geöffnet wird. In diesem Beispiel sollte jeweils immer nur eines der Absperrventile 42, 52, 62 geöffnet werden. Im übrigen funktioniert die Vorrichtung gemäss Fig. 2 gleich wie zu Fig. 1 beschrieben.

Die Drosselstelle 29 kann ein Kapillarrohr oder ein geeignetes Drosselventil oder eine Serie von Drosselblenden sein. Wichtig ist, dass durch den ständig durchströmten Drosselquerschnitt eine kleine Druckdifferenz zwischen dem Abscheider 14 und dem Behälter 20 aufrechterhalten wird.

Die Oelablassleitung 23 kann - statt zum Sammelgefäss 34 - zum Triebwerk 11 zurückgeführt werden, wogegen die Leitung 27 zur Ansaugleitung 12 des Kompressors zurückgeführt werden kann. Letzteres empfiehlt sich besonders, wenn es sich bei dem Gas um ein solches handelt, das teuer, giftig und/oder die Umwelt belastend ist.

Die erfindungsgemässe Vorrichtung ist nicht auf Abscheider mit eingebautem Faserfilter beschränkt, sondern es is auch möglich, als Prallplatten-Abscheider, Zyklonabscheider, Raschigring-Abscheider ausgebildete Geräte zu verwenden.

Die Beschriebenen Betätigungen der verschiedenen Absperrventile können - statt von Hand - auch automatisiert mit Hilfe geeigneter Steuer- oder Regelgeräte vorgenommen werden. Ausserdem ist es möglich, eine Sicherheitsüberwachung der Druckdifferenz zwischen den Abscheidern 14, 44, 54 und 64 einerseits und dem Behälter 20 andererseits vorzusehen. Eine solche Ueberwachung würde dann ein Oeffnen des Absperrventils 4, 42, 52 bzw. 62 verhindern, falls das Absperrventil 37 sich noch in Offenstellung befände, die Drosselstelle 29 falsch eingestellt wäre oder eine Leckage am Gehälter 20 und/oder einem der Abscheider eingetreten wäre.

Bei genügend grossem Höhenunterschied zwischen den Abscheidern 14, 44, 54, 64 einerseits und dem Behälter 20 andererseits ist es auch möglich, die Leitung 27 wegzulassen und die Drosselstelle 29 direkt am Behälter 20 anzuschliessen.

Statt Oel können mit der Vorrichtung auch andere Flüssigkeiten, die im komprimierten Gas enthalten sind, abgeschieden und abgelassen werden.

## Patentansprüche

1. Vorrichtung zum Entfernen von Oel einem Strom komprimierten Gases, mit mindestens einem Abscheider (14), der über einen Eintritt und einen Austritt an eine den Gasstrom führende Leitung angeschlossen ist und in dem Oel vom Gas getrennt und über einen absperrbaren Oelablass entfernt wird, dadurch **gekennzeichnet**, dass unterhalb des Abscheiders ein einen Gasraum (21) und einen Oelsammelraum (22) aufweisender Behälter (20) vorhanden ist, der über den absperrbaren Oelablass am Abscheider mit diesem verbunden ist, dass der Gasraum (21) des Behälters (20) über ein Absperrventil (25) mit dem Gasaustritt des Abscheiders verbunden ist, dass der Gasraum (21) des Behälters ausserdem über eine Drosselstelle (29) mit einem Raum verbunden ist, in dem ein niedrigerer Druck herrscht als im Gasraum (21), und dass der Oelsammelraum (22) des Behälters (20) mit einem ein Absperrventil (37) aufweisenden Oelablass versehen ist.

2. Vorrichtung nach Anspruch 1, dadurch gekennzeichnet, dass sowohl in der Verbindung des Oelablasses des Abscheiders (14) mit dem Behälter (20) als auch in der Verbindung zwischen dem Gasaustritt des Abscheiders und dem Gasraum (21) des Behälters ein gegen den Abscheider bzw. den Gasaustritt schliessendes Rückschlagventil (30 bzw. 28) angeordnet ist.

3. Vorrichtung nach Anspruch 1 oder 2, dadurch gekennzeichnet, dass die die Drosselstelle (29) aufweisende Verbindung des Gasraums (21) des Behälters (20) ein Absperrventil (26) aufweist.

4. Vorrichtung nach Anspruch 1, dadurch gekennzeichnet, das die Drosselstelle (29) als Kapillarrohr ausgebildet ist.

5. Vorrichtung nach Anspruch 1, wobei der Gaseintritt des Abscheiders mit der Druckseite eines Kompressors (10) verbunden ist, dadurch gekennzeichnet, dass der Oelablass des Behälters zum Triebwerk des Kompressors geführt ist.

6. Vorrichtung nach Anspruch 5, dadurch gekennzeichnet, dass der Gasraum (21) des Behälters (20) über eine absperrbare Leitung mit der Saugseite des Kompressors verbunden ist.

## Claims

1. Apparatus for removing oil from a flow of compressed gas, comprising at least one separator (14), which is connected via an inlet and an outlet to a line carrying the flow of gas and in which oil is separated from the gas and removed via a closable oil drain, characterised in that a tank (20) containing a gas space (21) and an oil collecting space (22) is provided beneath the separator and is connected to the separator via the closable oil drain at the separator, in that the gas space (21) of the tank (20) is connected via a shut-off valve (25) to the separator gas outlet, in that the gas space (21) of the tank is also connected via a restrictor (29) to a space in which there is a lower pressure than in the gas space (21), and in that the oil collecting space (22) of the tank (20) is provided with an oil drain comprising a shut-off valve (37).

2. Apparatus according to claim 1, characterised in that a non-return valve (30 and 28 respectively) closing against the separator and the gas outlet respectively is provided both in the connection between the oil drain of the separator (14) and the tank (20), and in the connection between the gas outlet of the separator and the gas space (21) of the tank.

3. Apparatus according to claim 1 or 2, characterised in that the connection of the gas space (21) of the tank (20) comprising the restrictor (29) comprises a shut-off valve (26).

4. Apparatus according to claim 1, characterised in that the restrictor (29) is in the form of a capillary tube.

5. Apparatus according to claim 1, in which the gas inlet of the separator is connected to the pressure side of a compressor (10), characterised in that the oil drain of the tank is taken to the compressor drive.

6. Apparatus according to claim 5, characterised in that the gas space (21) of the tank (20) is connected to the intake side of the compressor via a closable line.

**Revendications**

1. Dispositif pour éliminer l'huile contenue dans un courant de gaz comprimé, comportant au moins un séparateur (14) qui est raccordé, par une entrée et une sortie, à une conduite transportant le courant de gaz et dans lequel l'huile est séparée du gaz et éliminée par une évacuation d'huile pouvant être fermée, caractérisé en ce qu'il est prévu au-dessous du séparateur un réservoir (20) comportant une chambre de gaz (21) et une chambre de collecte d'huile (22), lequel réservoir est relié au séparateur par l'évacuation d'huile pouvant être fermée, en ce que la chambre de gaz (21) du réservoir (20) est reliée, par une vanne d'arrêt (25), à la sortie de gaz du séparateur, en ce que la chambre de gaz (21) du réservoir est en outre reliée, par un dispositif d'étranglement (29), à une chambre dans laquelle règne une pression inférieure à la pression de la chambre de gaz (21), et en ce que la chambre de collecte d'huile (22) du réservoir (20) est pourvue d'une évacuation d'huile comportant une vanne d'arrêt (37).

2. Dispositif selon la revendication 1, caractérisé en ce qu'il est prévu, dans la liaison entre l'évacuation d'huile du séparateur (14) et le réservoir (20), ainsi que dans la liaison entre la sortie de gaz du séparateur et la chambre de gaz (21) du réservoir, une soupape de non-retour (respectivement 30 et 28) se fermant respectivement par rapport au séparateur et à la sortie de gaz.

3. Dispositif selon la revendication 1 ou 2, caractérisé en ce que la liaison de la chambre de gaz (21) du réservoir (20), comportant le dispositif d'étranglement (29), possède une vanne d'arrêt (26).

4. Dispositif selon la revendication 1, caractérisé en ce que le dispositif d'étranglement (29) est un tube capillaire.

5. Dispositif selon la revendication 1, dans lequel l'entrée de gaz du séparateur est reliée au côté pression d'un compresseur (10), caractérisé en ce que l'évacuation d'huile du réservoir mène au mécanisme de commande du compresseur.

6. Dispositif selon la revendication 5, caractérisé en ce que la chambre de gaz (21) du réservoir (20) est reliée au côté aspiration du compresseur par une conduite pouvant être fermée.

Fig.1

# Fig.2